# FASCICULE DE BREVET EUROPEEN

(11) **EP 3 060 420 B1**
(45) Date de publication et mention de la délivrance du brevet: **29.04.2020**
(21) Numéro de dépôt: 14790223.3
(22) Date de dépôt: 07.10.2014
(51) Int. Cl.: B60K 6/365, B60K 6/387, F16H 55/36

(54) **SYSTEME DE TRANSMISSION POUR MOTEUR DE COMBUSTION INTERNE AVEC ALTERNO-DEMARREUR**
ÜBERTRAGUNGSSYSTEM FÜR BRENNKRAFTMASCHINE MIT GENERATOR-STARTER
TRANSMISSION SYSTEM FOR INTERNAL COMBUSTION ENGINE WITH ALTERNATOR-STARTER

(30) Priorité: 23.10.2013 FR 1360307
(43) Date de publication de la demande: 31.08.2016
(73) Titulaire: Renault S.A.S., 92100 Boulogne-Billancourt (FR)
(72) Inventeur: SAINT-LEGER, Gérard, F-78000 Versailles (FR)
(86) Numéro de dépôt international: PCT/FR2014/052534
(87) Numéro de publication internationale: WO 2015/059382

(56) Documents cités:
- WO-A1-01/88369
- DE-A1-102011 104 144

## Description

La présente invention concerne, de façon générale, le domaine des systèmes de transmission avec alterno-démarreur, utilisés notamment pour le démarrage des moteurs à combustion interne.

Elle s'applique en particulier, mais de façon non limitative, aux systèmes Stop Start.

Il est connu de tels systèmes qui utilisent actuellement un alterno-démarreur avec un démarreur.

La particularité de l'alterno-démarreur réside dans sa capacité à démarrer le moteur, et à produire l'électricité nécessaire à bord du véhicule à partir de la rotation du moteur.

Le démarreur permet de démarrer le moteur à froid et l'alterno-démarreur permet de démarrer le moteur quand il est chaud dans les phases de start.

Des solutions visent à supprimer le démarreur en assurant des rapports d'entraînement entre le moteur thermique et l'alterno-démarreur qui permettent de transmettre le couple nécessaire pour le démarrage à froid sans pénaliser ensuite le mode générateur d'énergie électrique.

La demande de brevet FR2847960 décrit un tel système de transmission dans lequel le vilebrequin d'un moteur à combustion est couplé par l'intermédiaire d'un système de transmission par courroies et de plusieurs poulies, à un arbre d'un alterno-démarreur.

Un système de couplage à deux états, à savoir un premier état correspondant à une phase de démarrage du moteur, dans lequel l'arbre de l'alterno-démarreur entraîne le vilebrequin du moteur dans un premier rapport de transmission, et un deuxième état dans lequel le vilebrequin du moteur entraîne l'arbre de l'alterno-démarreur dans un deuxième rapport de transmission, les deux états ayant deux rapports de transmission différents.

Le système de transmission comporte deux courroies disposées entre les différentes poulies pour réaliser la transmission entre l'arbre de l'alterno-démarreur et le vilebrequin.

Ce système de transmission est complexe et volumineux.

Il est décrit un autre système de transmission dans la demande de brevet WO 01/88369 qui utilise un ensemble de pignons complexes.

Dans ce contexte, la présente invention a pour but de proposer un système de transmission plus simple et exempt de l'un au moins des inconvénients précédemment évoqués.

Le système de transmission comprend les caractéristiques de la revendication 1.

Avantageusement, la deuxième poulie est située à l'intérieur de la première poulie et en ce que les moyens de liaison comportent deux galets d'entraînement montés en contact l'un avec l'autre, libres en rotation et solidaires d'axes fixés au bloc moteur, un premier galet d'entraînement roulant sur une couronne interne de la première poulie, un deuxième galet d'entraînement roulant sur une couronne externe de la deuxième poulie.

Avantageusement, les axes des galets d'entraînements sont fixes dans le bloc moteur et les galets d'entraînements tournant librement autour de ces axes.

Avantageusement, le moyen de couplage comporte une première partie d'extrémité apte à être fixée en rotation à la première poulie et une deuxième partie d'extrémité apte à être fixée en rotation à la deuxième poulie.

Avantageusement, le moyen de couplage comporte une partie centrale entre la première et la deuxième partie d'extrémité, et en ce que la première partie d'extrémité est cylindrique et apte à être fixée en rotation dans un moyeu de la première poulie, et en ce que la deuxième partie d'extrémité est cylindrique et apte à être fixée en rotation dans un moyeu de la deuxième poulie.

Avantageusement, le moyen de couplage comprend un crabot.

Avantageusement, le moyen de couplage est un crabot dont des dents de la première partie cylindrique d'extrémité s'engrènent dans des gorges du premier moyeu et dont des dents de la deuxième partie cylindrique d'extrémité s'engrènent dans des gorges du deuxième moyeu.

Avantageusement, la partie centrale à symétrie de révolution présente un corps cylindrique et deux épaulements situés aux extrémités du corps cylindrique de façon à réaliser entre eux un logement.

Avantageusement, l'un des deux épaulements comporte une paroi radiale destinée à venir en butée contre une paroi radiale de la première poulie dans la première position, et l'autre des deux épaulements comporte une paroi radiale destinée à venir en butée contre une paroi radiale de la deuxième poulie dans la deuxième position.

Avantageusement, les moyens de pilotage comportent des premiers moyens magnétiques fixés sur une tige reliée au bloc moteur, des deuxièmes moyens magnétiques qui coulissent sur la tige et déplacés sous l'action des premiers moyens magnétiques, les deuxièmes moyens magnétiques étant reliés au moyen de couplage, et des moyens élastiques de rappel contre l'action des premiers moyens magnétiques.

Avantageusement, les premiers moyens magnétiques comportent au moins un électro-aimant, les deuxièmes moyens magnétiques comportent un élément en matière magnétique présentant une bille roulant dans le logement du moyen de couplage, l'élément en matière magnétique coopérant avec l'électro-aimant.

La présente invention concerne également un véhicule comprenant un système de transmission défini ci-avant.

D'autres caractéristiques et avantages de l'invention ressortiront clairement de la description qui en est faite ci-après, à titre indicatif et nullement limitatif, en référence aux dessins annexés, dans lesquels
- la figure 1 représente une vue coupe longitudinale selon l'axe d'un arbre d'entraînement du système de transmission selon l'invention ;
- la figure 2 représente une vue de face arrière du système de transmission selon l'invention.

La présente invention concerne un système de transmission d'un véhicule.

Le système de transmission comprend : un bloc moteur 1 à combustion interne équipé d'un arbre d'entraînement 2 s'étendant selon un axe longitudinal X relié au vilebrequin du moteur, et un alterno-démarreur 3 dont le déplacement en rotation de l'arbre (non représenté ici) est lié au déplacement en rotation de l'arbre d'entraînement 2.

Une première poulie 4 est disposée selon l'axe longitudinal X de l'arbre d'entraînement 2.

Une poulie d'entraînement 5 est disposée sur l'arbre de l'alterno-démarreur 3 et est reliée à la première poulie 4 par une courroie C.

La première poulie 4 dite 'grande poulie' est montée libre en rotation sur l'arbre d'entraînement 2.

Conformément à l'invention, le système de transmission comprend des moyens de transmission 6 du mouvement de rotation entre l'arbre d'entraînement 2 et la première poulie 4, et un moyen de couplage 7 en rotation permettant l'entraînement de l'arbre d'entraînement 2 avec l'alterno-démarreur 3.

Le moyen de couplage 7 est déplaçable, par des moyens de pilotage 8, selon la direction de l'axe longitudinal X et permet de coupler dans une première position, la première poulie 4 et l'arbre d'entraînement 2, et dans une deuxième position, les moyens de transmission 6 et l'arbre d'entraînement 2.

Plus précisément, les moyens de transmission 6 comportent une deuxième poulie 9 disposée selon l'axe longitudinal X de l'arbre d'entraînement 2 et montée libre en rotation sur l'arbre d'entraînement 2, et entraînée par le moyen de couplage 7 dans la deuxième position, le diamètre de la deuxième poulie 9 dite 'petite poulie' étant inférieur au diamètre de la grande poulie 4.

Les poulies 4 et 9 sont fixées axialement à l'arbre d'entraînement 2.

Par exemple, il peut être utilisé des flasques 10 fixés aux poulies et qui s'engagent dans une gorge annulaire 11 de l'arbre d'entraînement 2.

Ainsi, grâce à l'invention, le déplacement en rotation de l'arbre d'entraînement 2 est lié au déplacement en rotation de l'arbre de l'alterno-démarreur 3, par l'intermédiaire du moyen de couplage 7 et de la grande poulie 4 dans la première position, et du moyen de couplage 7 et de la petite poulie 9 dans la deuxième position, le système de transmission réalisant alors deux rapports de transmission différents.

L'invention pourrait être généralisée à plus que deux poulies et plus qu'un seul moyen de couplage 7. Dans une réalisation non représentée, on pourrait disposer par exemple trois poulies de diamètres différents montées folles en rotation le long de l'arbre d'entraînement 2 avec deux crabots, un crabot entre deux poulies de diamètres différents.

Des moyens de liaison 12 entre la petite poulie 9 et la grande poulie 4 permettent de transmettre le mouvement de rotation entre la petite poulie 9 et la grande poulie 4, la grande poulie 4 étant reliée à la poulie de l'alterno-démarreur 3 par la courroie C.

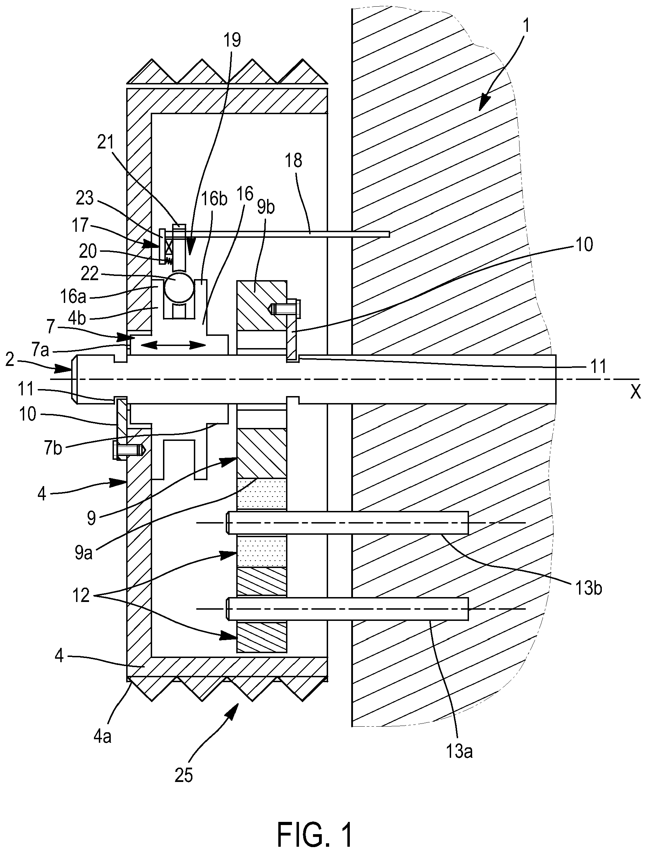

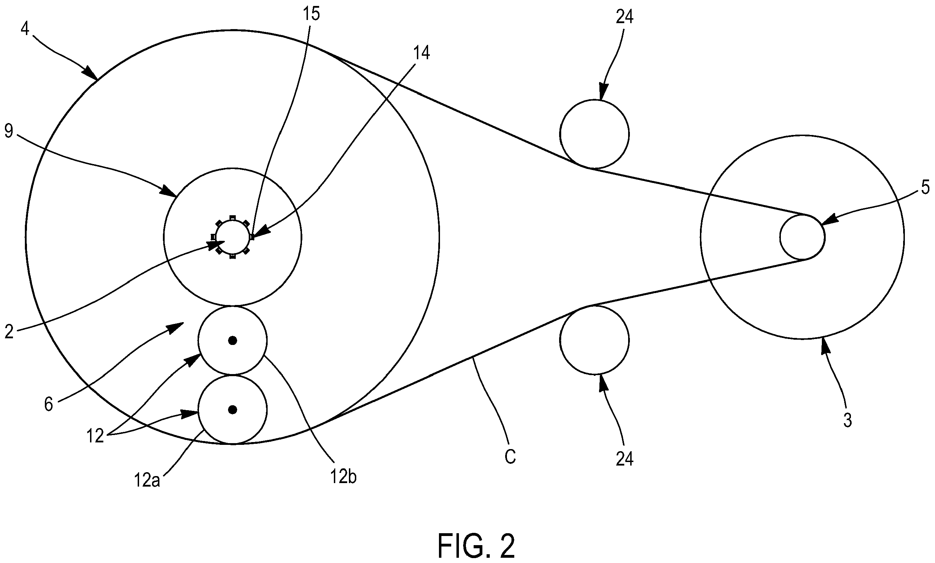

En l'espèce ici, sur les figures 1 et 2, la deuxième poulie 9 est située à l'intérieur de la première poulie 4.

Les moyens de liaison 12 comportent deux galets d'entraînements 12a, 12b montés en contact l'un avec l'autre, libres en rotation et solidaires d'axes 13 fixés au bloc moteur 1.

Un premier galet d'entraînement 12a roule sur une couronne ou périphérie interne 4a de la première poulie 4.

Un deuxième galet d'entraînement 12b roule sur une couronne ou périphérie externe 9a de la deuxième poulie 9.

Avantageusement, les axes 13 des galets d'entraînements 12a, 12b sont fixes dans le bloc moteur 1 et les galets d'entraînements 12a, 12b tournent librement sur les axes 13, par exemple par l'utilisation de paliers ou de roulements non représentés ici.

Les galets d'entraînements 12a, 12b peuvent être en matière souple.

Par exemple, ils peuvent être en caoutchouc rigide de façon à réaliser un écrasement des galets d'entraînements 12a, 12b pour obtenir suffisamment de pression afin de transmettre le couple d'entraînement sans réaliser trop de frottements pour éviter les pertes énergétiques.

Les galets d'entraînements 12a, 12b peuvent être de taille différentes et/ou désaxés l'un par rapport à l'autre.

En variante de réalisation non illustrée ici, les galets d'entraînements 12a, 12b peuvent être remplacés par des pignons ou un système de courroie C.

Le moyen de couplage 7 est un crabot.

Le crabot est, par exemple, cannelé intérieurement pour tourner avec l'arbre d'entraînement 2 et coulisser sur lui.

En variante de réalisation, il peut coopérer des moyens par exemple des évidements qui coopèrent avec des butées situées sur l'arbre d'entraînement et permettant de les fixer axialement et de les entraîner ensemble dans la première position et dans la deuxième position.

Le crabot comporte une première partie d'extrémité 7a apte à être fixée en rotation à la première poulie 4 et une deuxième partie d'extrémité 7b apte à être fixée en rotation à la deuxième poulie 9.

Plus précisément, la première partie d'extrémité 7a est cylindrique et apte à être fixée en rotation dans un moyeu de la première poulie 4, et la deuxième partie d'extrémité 7b est cylindrique et apte à être fixée en rotation dans un moyeu de la deuxième poulie 9.

Ici, le crabot présente des dents 14 sur la première partie cylindrique d'extrémité 7a s'engrenant dans des gorges 15 du premier moyeu et des dents 14 sur la deuxième partie cylindrique d'extrémité 7b s'engrenant dans des gorges 15 du deuxième moyeu.

Il est représenté 8 dents sur la figure 2. Ce nombre n'est pas limitatif.

Le nombre de dents peut être, par exemple, diminué en augmentant leur taille.

Les dents 14 et gorges 15 sont, par exemple, en acier et biseautées pour s'engrener avec le minimum d'effort et de bruit.

Le crabot comporte une partie centrale 16 entre la première et la deuxième partie d'extrémité 7b.

La partie centrale 16 à symétrie de révolution présente un corps cylindrique et deux épaulements 16a, 16b situés aux extrémités du corps cylindrique en saillie, de façon à réaliser entre eux un logement 16c.

Ici, l'un des deux épaulements 16a comporte une paroi radiale destinée à venir en butée axiale contre une paroi radiale 4b de la première poulie 4 dans la première position, et l'autre des deux épaulements 16b comporte une paroi radiale 9b destinée à venir en butée axiale contre une paroi radiale de la deuxième poulie 9 dans la deuxième position.

Il pourrait être prévu d'autres moyens de butée du crabot sur l'arbre d'entraînement 2 et les épaulements 16a, 16b pourraient ne pas venir en contact avec les parois radiales de la grande poulie 4 et de la petite poulie 9.

Le moyen de couplage 7 est déplaçable par des moyens de pilotage 8.

Ici, les moyens de pilotage 8 comportent des premiers moyens magnétiques 17 fixés sur une tige reliée au bloc moteur 1, des deuxièmes moyens magnétiques 19 qui coulissent sur la tige 18 et déplacés sous l'action des premiers moyens magnétiques 17, les deuxièmes moyens magnétiques 19 étant reliés au moyen de couplage 7, et des moyens élastiques de rappel 20 contre l'action des premiers moyens magnétiques 17.

Plus précisément, les premiers moyens magnétiques 17 comportent au moins un électro-aimant fixé sur la tige 18.

Les deuxièmes moyens magnétiques 19 comportent un élément en matière magnétique 21, par exemple en acier, coopérant avec une bille 22 roulant dans le logement 16c du moyen de couplage 7, l'élément en matière magnétique coopérant avec l'électro-aimant.

L'élément en matière magnétique est de forme rectangulaire et coulisse sur la tige.

Un ressort est disposé à l'extrémité de la tige sur un élément d'extrémité 23. Il repousse l'élément en matière magnétique vers la petite poulie 9.

Cette disposition du ressort permet l'utilisation en mode dégradé de la petite poulie 9 accouplé au crabot, si par exemple l'électro-aimant ne fonctionne plus.

La bille 22 est en appui sur une partie circulaire disposé dans le logement 16c du crabot.

D'autres réalisations et dispositions de l'électro-aimant et du ressort sont envisageables.

Dans une autre variante de réalisation non représentée, les moyens de pilotage 8 sont agencés pour permettre une troisième position débrayée dite position intermédiaire du moyen de couplage 7 situé entre la première position et la deuxième position, et n'entraînant aucune des deux poulies.

Avec, par exemple, un pilotage du courant qui traverse l'électro-aimant pour créer différentes intensités de force magnétique, un fort courant permet de positionner le crabot accouplé avec la grande poulie 4, un faible courant permet de positionner le crabot dans une position intermédiaire entre les deux poulies et l'absence de courant permet de positionner le crabot accouplé avec la petite poulie 9.

Des galets 24 permettent de tendre la courroie C pour le mode démarreur ou moteur (générateur démarrant le moteur), et pour le mode alternateur (moteur démarré entraînant l'alternateur).

Des moyens crantés 25 permettent d'éviter le glissement de la courroie C sur la grande poulie 4.

Lors du mode démarreur, le système de transmission est utilisé de la façon suivante.

Pour démarrer le moteur froid (par exemple 0°C), l'arbre et la poulie de l'alterno-démarreur 3 sont entraînés par une batterie de démarrage.

La poulie de l'alterno-démarreur 3 tourne et entraîne, par la courroie C, la grande poulie 4 dans laquelle le moyen de couplage 7 est fixé suivant la première position, le moyen de couplage 7 transmettant le mouvement de rotation à l'arbre d'entraînement 2 du vilebrequin.

Le petit rapport d'entraînement entre la poulie de l'alterno-démarreur 3 et la grande poulie 4 qui est fonction de la taille des deux poulies (par exemple 1/6) permet d'entraîner le moteur à un régime très inférieur à celui de l'alterno-démarreur 3, ce qui permet de réaliser un couple d'entraînement important pour l'arbre d'entraînement 2 et de vaincre les frottements importants à ces basses températures.

Les galets d'entraînements 12a, 12b et la petite poulie 9 sont entrainés libres en rotation dans le vide.

Dès que le moteur est démarré, le moyen de couplage 7 est déplacé dans la deuxième position pour se fixer à la petite poulie 9.

Le rapport d'entraînement entre la poulie de l'alterno-démarreur 3 et la petite poulie 9 (par exemple 1/3) permet d'entraîner le moteur à un régime inférieur à celui de l'alterno-démarreur 3, mais plus grand qu'avec la grande poulie 4, ou d'entraîner l'alterno-démarreur au même rapport que l'entraînement classique d'un alternateur.

Lorsque le moteur a déjà été démarré et que l'on souhaite à nouveau le démarrer, le moyen de couplage 7 est dans la deuxième position et accouplé à la petite poulie 9.

Dans ce cas, la poulie de l'alterno-démarreur 3 tourne et entraîne la grande poulie 4 par la courroie C.

La grande poulie 4 entraîne le premier galet d'entraînement 12a dans son sens de rotation, ce premier galet d'entraînement 12a entraînant dans un sens de rotation opposé à celui de la grande poulie 4 le deuxième galet d'entraînement 12b.

Le deuxième galet d'entraînement 12b entraîne dans le sens de rotation de la grande poulie 4, la petite poulie 9 et l'arbre d'entraînement 2 auquel elle est solidarisée ou accouplée en rotation, par l'intermédiaire du moyen de couplage 7 situé dans la deuxième position.

L'utilisation de la petite poulie 9 permet de démarrer le moteur qui a déjà été démarré et dont la température a augmenté (notamment pour l'usage stop and start), le couple d'entraînement pour l'arbre d'entraînement 2 pouvant être moins important, les frottements à vaincre étant plus faibles du fait de la température du moteur.

Lors du mode alternateur (moteur démarré entraînant l'alternateur), le système de transmission est utilisé de la façon suivante.

Dans le mode de réalisation préféré, l'arbre d'entraînement 2 entraîne la petite poulie 9 par l'intermédiaire du moyen de couplage 7 auquel elle est fixée ou accouplée en rotation dans la deuxième position.

La petite poulie 9 entraîne le deuxième galet d'entraînement 12b dans son sens de rotation, ce deuxième galet d'entraînement 12b entraînant dans le sens de rotation opposé à celui de la petite poulie 9, le premier galet d'entraînement 12a.

Le premier galet d'entraînement 12a entraîne la grande poulie 4 qui entraîne la courroie C et la poulie de l'alterno-démarreur 3 dans le sens de rotation de la petite poulie 9, ce qui permet de générer de l'électricité.

Dans une autre variante d'utilisation du mode alternateur, dans le cas d'un ralenti à froid, il est possible d'utiliser la grande poulie 4 pour transmettre le mouvement de rotation de l'arbre d'entraînement 2 à la poulie de l'alterno-démarreur 3, le moyen de couplage 7 étant solidarisé en rotation à la grande poulie 4 dans la première position.

Ce qui génère des grandes vitesses de la poulie et de l'arbre de l'alterno-démarreur 3 et permet de produire plus d'électricité.

Cette réalisation est effectuée dans des limites de vitesses de la grande poulie 4 pour éviter d'endommager l'alterno-démarreur 3.

Le système de transmission permet d'utiliser deux rapports de transmission différents dans le mode démarreur et dans le mode alternateur.

Il présente un faible encombrement par rapport aux systèmes de l'état de l'art.

Il permet d'utiliser l'alterno-démarreur 3 lorsque le moteur est froid à l'aide d'une batterie dont la taille est optimisée et moins couteuse que celle utilisée dans l'état de l'art.

## Revendications

1. Système de transmission comprenant un bloc moteur (1) à combustion interne équipé d'un arbre d'entraînement (2) s'étendant selon un axe longitudinal (X), un alterno-démarreur (3) relié à l'arbre d'entraînement (2), une première poulie (4) disposée selon l'axe longitudinal (X) de l'arbre d'entraînement (2) et montée libre en rotation sur l'arbre d'entraînement (2), une poulie d'entraînement (5) de l'alterno-démarreur (3) et reliée à la première poulie (4) par une courroie (C),
**caractérisé en ce que** le système de transmission comprend :
- des moyens de transmission (6) du mouvement de rotation entre l'arbre d'entraînement (2) et la première poulie (4) comportant une deuxième poulie (9) disposée selon l'axe longitudinal (X) de l'arbre d'entraînement (2) et montée libre en rotation sur l'arbre d'entraînement (2), combiné à des moyens de liaison (12) entre la deuxième poulie (9) et la première poulie (4), et
- un moyen de couplage (7) en rotation, déplaçable par des moyens de pilotage (18), selon la direction de l'axe longitudinal (X), et permettant de coupler, de façon à réaliser deux rapports de transmission différents entre l'arbre d'entraînement (2) et l'alterno-démarreur (3):
dans une première position, l'arbre d'entraînement (2) et la première poulie (4), et
dans une deuxième position, l'arbre d'entraînement (2) et la deuxième poulie des moyens de transmission (6) entraînée par le moyen de couplage (7).

2. Système de transmission selon la revendication 1, **caractérisé en ce que** le diamètre de la deuxième poulie (9) des moyens de transmission (6) est inférieur au diamètre de la première poulie (4).

3. Système de transmission selon la revendication 2, **caractérisé en ce que** la deuxième poulie (9) est située à l'intérieur de la première poulie (4) et **en ce que** les moyens de liaison (12) comportent deux galets d'entraînements (12a, 12b) montés en contact l'un avec l'autre, libres en rotation et solidaires d'axes (13) fixés au bloc moteur (1), un premier galet d'entraînement (12a) roulant sur une couronne interne (4a) de la première poulie (4), un deuxième galet d'entraînement (12b) roulant sur une couronne externe (9a) de la deuxième poulie (9).

4. Système de transmission selon la revendication 3, **caractérisé en ce que** les axes (13) des galets d'entraînements (12a, 12b) sont fixes dans le bloc moteur et les galets d'entraînements (12a, 12b) tournant librement autour de ces axes (13).

5. Système de transmission selon l'une des revendications 1 à 4, **caractérisé en ce que** le moyen de couplage (7) comporte une première partie d'extrémité (7a) apte à être fixée en rotation à la première poulie (4) et une deuxième partie d'extrémité (7b) apte à être fixée en rotation à la deuxième poulie (9).

6. Système de transmission selon la revendication 5, **caractérisé en ce que** le moyen de couplage (7) comporte une partie centrale (16) entre la première et la deuxième partie d'extrémité (7b), et **en ce que** la première partie d'extrémité (7a) est cylindrique et apte à être fixée en rotation dans un moyeu de la première poulie (4), et **en ce que** la deuxième partie d'extrémité (7b) est cylindrique et apte à être fixée en rotation dans un moyeu de la deuxième poulie (9).

7. Système de transmission selon l'une des revendications 5 à 6, **caractérisé en ce que** le moyen de couplage (7) est un crabot.

8. Système de transmission selon la revendication 7, **caractérisé en ce que** le moyen de couplage (7) comprend un crabot dont des dents (14) de la première partie cylindrique d'extrémité s'engrènent dans des gorges (15) du premier moyeu et dont des dents (14) de la deuxième partie cylindrique d'extrémité s'engrènent dans des gorges (15) du deuxième moyeu.

9. Système de transmission selon l'une des revendications 7 à 8, **caractérisé en ce que** la partie centrale (16) à symétrie de révolution présente un corps cylindrique et deux épaulements (16a, 16b) situés aux extrémités du corps cylindrique de façon à réaliser entre eux un logement (16c).

10. Système de transmission selon la revendication 9, **caractérisé en ce que** l'un des deux épaulements (16a, 16b) comporte une paroi radiale destinée à venir en butée contre une paroi radiale (4b) de la première poulie (4) dans la première position, et l'autre des deux épaulements (16a, 16b) comporte une paroi radiale destinée à venir en butée contre une paroi radiale (9b) de la deuxième poulie (9) dans la deuxième position.

11. Système de transmission selon la revendication 9 ou 10, **caractérisé en ce que** les moyens de pilotage (8) comportent des premiers moyens magnétiques (17) fixés sur une tige (18) reliée au bloc moteur (1), des deuxièmes moyens magnétiques (19) qui coulissent sur la tige (18) et déplacés sous l'action des premiers moyens magnétiques (17), les deuxièmes moyens magnétiques (19) étant reliés au moyen de couplage (7), et des moyens élastiques de rappel (20) contre l'action des premiers moyens magnétiques (17).

12. Système de transmission selon la revendication 11, **caractérisé en ce que** les premiers moyens magnétiques (17) comportent au moins un électro-aimant, les deuxièmes moyens magnétiques (19) comportent un élément en matière magnétique (21) présentant une bille (22) roulant dans le logement (16c) du moyen de couplage (7), l'élément en matière magnétique (21) coopérant avec l'électro-aimant.

13. Véhicule comprenant un système de transmission selon l'une des revendications 1 à 12.

## Patentansprüche

1. Kraftübertragungssystem, welches einen Brennkraftmaschinenblock (1), der mit einer sich entlang einer Längsachse (X) erstreckenden Antriebswelle (2) ausgestattet ist, einen Startergenerator (3), der mit der Antriebswelle (2) verbunden ist, eine erste Riemenscheibe (4), die entlang der Längsachse (X) der Antriebswelle (2) angeordnet ist und frei drehbar auf der Antriebswelle (2) gelagert ist, und eine Antriebsriemenscheibe (5) des Startergenerators (3), die mit der ersten Riemenscheibe (4) durch einen Riemen (C) verbunden ist, umfasst,
**dadurch gekennzeichnet, dass** das Kraftübertragungssystem umfasst:
- Mittel zur Übertragung (6) der Drehbewegung zwischen der Antriebswelle (2) und der ersten Riemenscheibe (4), die eine zweite Riemenscheibe (9) aufweisen, die entlang der Längsachse (X) der Antriebswelle (2) angeordnet ist und frei drehbar auf der Antriebswelle (2) gelagert ist, kombiniert mit Mitteln zur Verbindung (12) zwischen der zweiten Riemenscheibe (9) und der ersten Riemenscheibe (4), und
- ein Drehkopplungsmittel (7), das durch Steuerungsmittel (18) in der Richtung der Längsachse (X) verschiebbar ist und derart, dass zwei verschiedene Übersetzungsverhältnisse zwischen der Antriebswelle (2) und dem Startergenerator (3) realisiert werden, zu koppeln ermöglicht:
in einer ersten Position die Antriebswelle (2) und die erste Riemenscheibe (4), und
in einer zweiten Position die Antriebswelle (2) und die zweite Riemenscheibe der Übertragungsmittel (6), die von dem Kopplungsmittel (7) angetrieben wird.

2. Kraftübertragungssystem nach Anspruch 1, **dadurch gekennzeichnet, dass** der Durchmesser der zweiten Riemenscheibe (9) der Übertragungsmittel (6) kleiner als der Durchmesser der ersten Riemenscheibe (4) ist.

3. Kraftübertragungssystem nach Anspruch 2, **dadurch gekennzeichnet, dass** sich die zweite Riemenscheibe (9) im Inneren der ersten Riemenscheibe (4) befindet, und dadurch, dass die Verbindungsmittel (12) zwei Antriebsrollen (12a, 12b) umfassen, die in Kontakt miteinander angebracht, frei drehend und mit am Motorblock (1) befestigten Achsen (13) fest verbunden sind, wobei eine erste Antriebsrolle (12a) auf einem Innenkranz (4a) der ersten Riemenscheibe (4) abrollt, während eine zweite Antriebsrolle (12b) auf einem Außenkranz (9a) der zweiten Riemenscheibe (9) abrollt.

4. Kraftübertragungssystem nach Anspruch 3, **dadurch gekennzeichnet, dass** die Achsen (13) der Antriebsrollen (12a, 12b) im Motorblock befestigt sind und die Antriebsrollen (12a, 12b) im diese Achsen (13) frei drehen.

5. Kraftübertragungssystem nach einem der Ansprüche 1 bis 4, **dadurch gekennzeichnet, dass** das Kopplungsmittel (7) einen ersten Endteil (7a), der an der ersten Riemenscheibe (4) drehfest befestigbar ist, und einen zweiten Endteil (7b), der an der zweiten Riemenscheibe (9) drehfest befestigbar ist, aufweist.

6. Kraftübertragungssystem nach Anspruch 5, **dadurch gekennzeichnet, dass** das Kopplungsmittel (7) einen mittleren Teil (16) zwischen dem ersten und dem zweiten Endteil (7b) aufweist, und dadurch, dass der erste Endteil (7a) zylindrisch ist und drehfest in einer Nabe der ersten Riemenscheibe (4) befestigbar ist, und dadurch, dass der zweite Endteil (7b) zylindrisch ist und drehfest in einer Nabe der zweiten Riemenscheibe (9) befestigbar ist

7. Kraftübertragungssystem nach einem der Ansprüche 5 bis 6, **dadurch gekennzeichnet, dass** das Kopplungsmittel (7) eine Kupplungsklaue ist.

8. Kraftübertragungssystem nach Anspruch 7, **dadurch gekennzeichnet, dass** das Kopplungsmittel (7) eine Kupplungsklaue umfasst, von welcher Zähne (14) des ersten zylindrischen Endteils in Nuten (15) der ersten Nabe eingreifen und von welcher Zähne (14) des zweiten zylindrischen Endteils in Nuten (15) der zweiten Nabe eingreifen.

9. Kraftübertragungssystem nach einem der Ansprüche 7 bis 8, **dadurch gekennzeichnet, dass** der rotationssymmetrische mittlere Teil (16) einen zylindrischen Körper und zwei Ansätze (16a, 16b), die sich an den Enden des zylindrischen Körpers befinden, so dass sie zwischen sich eine Aufnahme (16c) herstellen, aufweist.

10. Kraftübertragungssystem nach Anspruch 9, **dadurch gekennzeichnet, dass** einer der zwei Ansätze (16a, 16b) eine radiale Wand aufweist, die dazu bestimmt ist, in der ersten Position an einer radialen Wand (4b) der ersten Riemenscheibe (4) zur Anlage zu kommen, und der andere der zwei Ansätze (16a, 16b) eine radiale Wand aufweist, die dazu bestimmt ist, in der zweiten Position an einer radialen Wand (9b) der zweiten Riemenscheibe (9) zur Anlage zu kommen.

11. Kraftübertragungssystem nach Anspruch 9 oder 10, **dadurch gekennzeichnet, dass** die Steuerungsmittel (8) erste magnetische Mittel (17), die an einer mit dem Motorblock (1) verbundenen Stange (18) befestigt sind, zweite magnetische Mittel (19), welche auf der Stange (18) gleiten und unter der Einwirkung der ersten magnetischen Mittel (17) verschoben werden, wobei die zweiten magnetischen Mittel (19) mit dem Kopplungsmittel (7) verbunden sind, und elastische Rückholmittel (20), die den ersten magnetischen Mitteln (17) entgegenwirken, aufweisen.

12. Kraftübertragungssystem nach Anspruch 11, **dadurch gekennzeichnet, dass** die ersten magnetischen Mittel (17) wenigstens einen Elektromagneten umfassen und die zweiten magnetischen Mittel (19) ein Element aus magnetischem Material (21) umfassen, das eine Kugel (22) aufweist, die in der Aufnahme (16c) des Kopplungsmittels (7) rollt, wobei das Element aus magnetischem Material (21) mit dem Elektromagneten zusammenwirkt.

13. Fahrzeug, welches ein Kraftübertragungssystem nach einem der Ansprüche 1 bis 12 umfasst.

## Claims

1. Transmission system comprising an internal combustion engine block (1) equipped a driveshaft (2) extending on a longitudinal axis (X), an alternator-starter (3) connected to the driveshaft (2), a first pulley (4) arranged on the longitudinal axis (X) of the driveshaft (2) and mounted free to rotate on the driveshaft (2), a pulley (5) for driving the alternator-starter (3) and connected to the first pulley (4) by a belt (C),
**characterized in that** the transmission system comprises:
- means (6) for transmission of the rotation movement between the driveshaft (2) and the first pulley (4) comprising a second pulley (9) arranged on the longitudinal axis (X) of the driveshaft (2) and mounted free to rotate on the driveshaft (2), combined with linking means (12) between the second pulley (9) and the first pulley (4), and
- a rotation coupling means (7) that can be moved by control means (18) in the direction of the longitudinal axis (X) and makes it possible to couple in such a manner as to achieve two different transmission ratios between the driveshaft (2) and the alternator-starter (3):
in a first position, the driveshaft (2) and the first pulley (4), and
in a second position, the driveshaft (2) and the second pulley of the transmission means (6) driven by the coupling means (7).

2. Transmission system according to Claim 1, **characterized in that** the diameter of the second pulley (9) of the transmission means (6) is less than the diameter of the first pulley (4).

3. Transmission system according to Claim 2, **characterized in that** the second pulley (9) lies inside the first pulley (4), and **in that** the linking means (12) comprise two drive rollers (12a, 12b) mounted in contact with one another, and which are free to rotate and secured to rods (13) fixed to the engine block (1), a first drive roller (12a) rolling on an internal crown (4a) of the first pulley (4), a second drive roller (12b) rolling on an external crown (9a) of the second pulley (9).

4. Transmission system according to Claim 3, **characterized in that** the rods (13) of the drive rollers (12a, 12b) are fixed in the engine block and the drive rollers (12a, 12b) turn freely about the rods (13).

5. Transmission system according to one of Claims 1 to 4, **characterized in that** the coupling means (7) comprises a first end part (7a) capable of being fixed in rotation to the first pulley (4) and a second end part (7b) capable of being fixed in rotation to the second pulley (9).

6. Transmission system according to Claim 5, **characterized in that** the coupling means (7) comprises a central part (16) between the first and the second end part (7b), and **in that** the first end part (7a) is cylindrical and capable of being fixed in rotation in a hub of the first pulley (4), and **in that** the second end part (7b) is cylindrical and capable of being fixed in rotation in a hub of the second pulley (9).

7. Transmission system according to one of Claims 5 to 6, **characterized in that** the coupling means (7) is a claw.

8. Transmission system according to Claim 7, **characterized in that** the coupling means (7) comprises a claw of which the teeth (14) of the first cylindrical end part mesh in grooves (15) of the first hub and of which the teeth (14) of the second cylindrical end part mesh in grooves (15) of the second hub.

9. Transmission system according to one of Claims 7 and 8, **characterized in that** the rotationally symmetric central part (16) has a cylindrical body and two shoulders (16a, 16b) located at the ends of the cylindrical body in such a manner as to form a housing (16c) between them.

10. Transmission system according to Claim 9, **characterized in that** one of the two shoulders (16a, 16b) comprises a radial wall designed to abut against a radial wall (4b) of the first pulley (4) in the first position, and the other of the two shoulders (16a, 16b) comprises a radial wall designed to abut against a radial wall (9b) of the second pulley (9) in the second position.

11. Transmission system according to Claim 9 or 10, **characterized in that** the control means (8) comprises first magnetic means (17) fixed on a bar (18) connected to the engine block (1), second magnetic means (19) that slide on the bar (18) and are moved through the action of the first magnetic means (17), the second magnetic means (19) being connected to the coupling means (7), and elastic return means (20) against the action of the first magnetic means (17).

12. Transmission system according to Claim 11, **characterized in that** the first magnetic means (17) comprise at least one electromagnet, the second magnetic means (19) comprise an element (21) made from magnetic material having a ball (22) rolling in the housing (16c) of the coupling means (7), the element (21) made from magnetic material interacting with the electromagnet.

13. Vehicle comprising a transmission system according to one of Claims 1 to 12.
